# EUROPÄISCHE PATENTSCHRIFT

(11) **EP 4 287 469 B1**
(45) Veröffentlichungstag und Bekanntmachung des Hinweises auf die Patenterteilung: **14.10.2026**
(21) Anmeldenummer: 23020135.2
(22) Anmeldetag: 17.03.2023
(51) Int. Cl.: H02K 9/19

(54) **KÜHLSYSTEM ZUR EFFEKTIVEN KÜHLUNG EINER ELEKTRISCHEN MASCHINE EINES KRAFTFAHRZEUGS UND VERWENDUNG EINES KÜHLSYSTEMS**
COOLING SYSTEM FOR EFFECTIVE COOLING OF AN ELECTRIC MACHINE OF A MOTOR VEHICLE AND USE OF A COOLING SYSTEM
SYSTÈME DE REFROIDISSEMENT EFFICACE D'UNE MACHINE ÉLECTRIQUE D'UN VÉHICULE AUTOMOBILE ET UTILISATION D'UN SYSTÈME DE REFROIDISSEMENT

(30) Priorität: 30.05.2022 DE 102022113563
(43) Veröffentlichungstag der Anmeldung: 06.12.2023
(73) Patentinhaber: Dr. Ing. h.c. F. Porsche Aktiengesellschaft, 70435 Stuttgart (DE)
(72) Erfinder: Oechslen, Stefan, 70176 Stuttgart (DE); Kübler, Simon, 74199 Untergruppenbach Unterheinriet (DE)

(56) Entgegenhaltungen:
- EP-B1- 2 080 258
- DE-A1- 102014 103 909
- DE-B4- 102019 117 893
- JP-U- S53 114 001
- US-A- 3 995 181
- US-A1- 2020 295 617
- US-B2- 9 300 189

## Beschreibung

Die Erfindung betrifft ein Kühlsystem, mit dessen Hilfe eine elektrische Maschine eines Kraftfahrzeugs effektiv gekühlt werden kann, sowie eine Verwendung eines derartigen Kühlsystems.

Aus US 2021/0170858 A1 ist ein Kühlsystem zur Kühlung einer elektrischen Maschine eines Kraftfahrzeugs bekannt, bei dem mit Hilfe eines Kühlmittels zunächst eine Leistungselektronik für die elektrische Maschine gekühlt wird und nachfolgend zumindest ein Teil des von der Leistungselektronik kommenden Kühlmittels zur Kühlung der elektrischen Maschine abgezweigt wird und zur Abkühlung des Kühlmittels in einem Kühler wieder zusammengeführt wird.

Aus US 3 995 181 A ist eine elektrische Maschine mit einem durch Statornuten eines Stators hindurchgeführten flüssigen Kühlöl bekannt, wobei ein Teil des Kühlöls über eine Bypassleitung von einem Wickelkopfbereich zu einem anderen Wickelkopfbereich an dem Stator vorbeigeführt wird, um den anderen Wickelkopfbereich mit dem über die Bypassleitung geführten kalten Kühlöl zu kühlen.

Aus US 9 300 189 B2 ist eine elektrische Maschine bekannt, bei der eine Kühlflüssigkeit durch einen konischen Luftspalt zwischen einem Rotor und einem Stator gefördert wird und oberhalb des Stators über einen Kühlkanal sowie durch ein Statorkanal hindurch von einem Wickelkopfbereich zu einem anderen Wickelkopfbereich zurückgefördert wird.

Aus JP S53 114001 U ist eine von einem Kühlgas axial durchströmte elektrische Maschine bekannt, bei der das Kühlgas einen Luftspalt zwischen einem Rotor und einem Stator sowie Durchgangsöffnungen in dem Rotor, in dem Stator und zwischen dem Stator und einem Gehäuse durchströmt.

Es besteht ein ständiges Bedürfnis die Kühlung elektrischer Maschinen von Kraftfahrzeugen effektiver zu gestalten.

Es ist die Aufgabe der Erfindung, Maßnahmen aufzuzeigen, die eine effektive Kühlung einer elektrischen Maschine eines Kraftfahrzeugs ermöglichen.

Die Lösung der Aufgabe erfolgt erfindungsgemäß durch ein Kühlsystem mit den Merkmalen des Anspruchs 1 sowie eine Verwendung mit den Merkmalen des Anspruchs 11. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Ein Aspekt der Erfindung betrifft ein Kühlsystem zur Kühlung einer elektrischen Maschine eines Kraftfahrzeugs mit einer Zugangsleitung zur Zuführung eines gekühlten Kühlmittels zu einem ersten Wickelkopfbereich der elektrischen Maschine, mindestens einer von dem ersten Wickelkopfbereich durch einen Stator, insbesondere durch eine oder mehrere Statornuten des Stators, der elektrischen Maschine bis zu einem zweiten Wickelkopfbereich der elektrischen Maschine führenden Kühlleitung und einer von dem ersten Wickelkopfbereich zum zweiten Wickelkopfbereich an dem Stator vorbei geführten Bypassleitung, wobei das grundsätzlich flüssige Kühlmittel gasförmige Bestandteile enthält, wobei die Bypassleitung zur Sammlung und/oder Abfuhr von Luft an einer in Schwerkraftrichtung höchsten Stelle von dem ersten Wickelkopfbereich abgeht und/oder an einer in Schwerkraftrichtung höchsten Stelle in den zweiten Wickelkopfbereich einmündet.

Ein weiterer Aspekt der Erfindung betrifft eine Verwendung eines zur Kühlung einer elektrischen Maschine eines Kraftfahrzeugs vorgesehenen Kühlsystems, mit einer Zugangsleitung zur Zuführung eines gekühlten Kühlmittels zu einem ersten Wickelkopfbereich der elektrischen Maschine, mindestens einer von dem ersten Wickelkopfbereich durch einen Stator der elektrischen Maschine bis zu einem zweiten Wickelkopfbereich der elektrischen Maschine führenden Kühlleitung und einer von dem ersten Wickelkopfbereich zum zweiten Wickelkopfbereich an dem Stator vorbei geführten Bypassleitung, wobei die Bypassleitung zur Sammlung und/oder Abfuhr von Luft an einer in Schwerkraftrichtung höchsten Stelle von dem ersten Wickelkopfbereich abgeht und/oder an einer in Schwerkraftrichtung höchsten Stelle in den zweiten Wickelkopfbereich einmündet; zu dem Zweck als Kühlmittel in dem Kühlsystem ein grundsätzlich flüssiges Kühlmittel mit gasförmigen Bestandteile zu verwenden.

Das Kühlsystem kann insbesondere zur Direktkühlung von stromführenden Bauelementen verwendet werden, indem ein elektrisch nichtleitendes Fluid, beispielsweise eine dielektrische Flüssigkeit, insbesondere wasserfreies Propylenglykol, als Kühlmittel verwendet wird. Wärmeleitwiderstände zwischen den stromführenden Bauelementen, insbesondere Leitungsschienen, und dem Kühlmittel können dadurch minimiert werden und eine hohe Kühlleistung erreicht werden. Hierbei können die zu kühlenden Komponenten, das heißt die im jeweiligen Wickelkopfbereich vorgesehenen Wickelköpfe der elektrischen Maschine, die in den Statornuten eingebrachten Wicklungen der elektrischen Maschine und/oder eine Leistungselektronik zum Betrieb der elektrischen Maschine, und/oder die Stromschienen zur elektrischen Verbindung der E-Maschine und der Leistungselektronik, in einem ausreichend abgedichteten und von dem Kühlmittel durchströmbaren Volumen angeordnet sein, das beispielsweise von einem Gehäuse mit Durchführungsöffnungen für das Kühlmittel begrenzt ist.

Es wurde jedoch erkannt, dass in dem grundsätzlich flüssigen Kühlmittel gasförmige Bestandteile enthalten sind. Beispielsweise kann Luft aus einem Ausgleichsbehälter mitgerissen werden, aufgrund von Druckverlusten in der Flüssigkeit gelöste Gase austreten und/oder an besonders heißen Kontaktstellen der zu kühlenden Komponente Kühlmittel verdampfen. Im Vergleich zu dem flüssigen Kühlmittel ist bei den gasförmigen Bestandteilen nur eine geringere Wärmeabfuhr möglich. Durch die an der höchsten Stelle mit den Wickelkopfbereichen verbundene Bypassleitung ist es möglich in dem Wickelkopfbereich vorliegende und/oder entstehende Gase zu sammeln und abzuführen. Der Anteil gasförmiger Bestandteile des Kühlmittels, welches die Wickelköpfe in dem ersten Wickelkopfbereich umspült, kann dadurch reduziert werden und die Wärmeübertragungsleistung, verbessert werden. Zudem kann auch der Anteil gasförmiger Bestandteile des Kühlmittels, welches die Wicklungen in den Statornuten kühlt, reduziert werden, wodurch wiederum die Wärmeübertragungsleistung verbessert werden kann. Vorteilhafter Weise wird auch das in dem zweiten Wickelkopfbereich vorliegende und/oder entstehende Gase gesammelt und abgeführt. Besonders bevorzugt ist in der Nähe eines Auslasses der Bypassleitung in den zweiten Wickelkopfbereich ein Einlass einer zu einer Pumpe und/oder Verdichter führenden Ableitung vorgesehen, so dass aus der Bypassleitung in den zweiten Wickelkopfbereich herausgedrückte gasförmige Bestandteile möglichst sofort wieder über die Ableitung gegebenenfalls mit weiteren in dem Wickelkopfbereich vorliegenden gasförmigen Bestandteilen abgeführt werden können. Hierbei kann die Bypassleitung derart dimensioniert sein, dass der zu erwartende Volumenstrom einer Gasphase im dem ersten Wickelkopfbereich von einem ebenfalls über die Bypassleitung abgeführten Anteil des Kühlmittels, insbesondere als Pfropfenströmung, durch die Bypassleitung hindurchgedrückt werden kann. Eine Ansammlung einer Gasphase in der Bypassleitung kann dadurch vermieden werden. Obwohl ein Anteil des flüssigen Kühlmittels über die Bypassleitung abgeführt wird und nicht an der Kühlung in dem Stator teilnimmt, kann durch die in die Bypassleitung mitgerissene Gasphase im Ergebnis die Kühlleistung erhöht werden, so dass eine effektive Kühlung einer elektrischen Maschine eines Kraftfahrzeugs ermöglicht ist.

In den Statornuten können stromdurchflossene Wicklungen eingebracht sein, die einen mit dem Rotor zusammenwirkenden Elektromotor ausbilden. Die Wicklungen können axial aus dem Stator herausragen und über einen jeweils zugeordneten Wickelkopf mit einer weiteren Wicklung in eine andere Statornut elektrisch verbunden sein. Hierbei können verschiedenen Phasen zugeordnete Wicklungen der jeweiligen Statornut über verschiedene Wickelköpfe miteinander verschaltet werden. Die insbesondere bogenförmig und/oder eckig verlaufenden Wickelköpfe können eine Umlenkung um ca. 180° bezogen auf eine Axialrichtung des Stators und einen Winkelversatz in Umfangsrichtung des Stators ausbilden. Die an einer ersten Axialseite von dem Stator abstehenden Wickelköpfe sind in dem ersten Wickelkopfbereich angeordnet, während die an einer von der ersten Axialseite wegweisenden zweiten Axialseite von dem Stator abstehenden Wickelköpfe in dem zweiten Wickelkopfbereich angeordnet sind. Der jeweilige Wickelkopfbereich kann durch die zugeordnete Axialseite des Stators und einem an dem Stator angesetzten Gehäuse begrenzt sein.

Der erste Wickelkopfbereich und der zweite Wickelkopfbereich ist über die mindestens eine Kühlleitung fluidisch miteinander verbunden. Die Kühlleitung kann beispielsweise als Bohrung und/oder Aussparung in einem Material des Stators ausgebildet sein, so dass das durch die Kühlleitung geförderte Kühlmittel den Stator und dadurch zumindest mittelbar die in den Statornuten vorgesehenen Wicklungen kühlen kann. Der durch die Gesamtheit der Kühlleitungen geförderte Massenstrom ist insbesondere deutlich größer als der durch die Bypassleitung geförderte Massenstrom. Beispielsweise ist der durch die Gesamtheit der Kühlleitungen geförderte Massenstrom mindestens um den Faktor 5, insbesondere mindestens um den Faktor 20, vorzugsweise mindestens um den Faktor 100 größer als der durch die Bypassleitung geförderte Massenstrom. Vorzugsweise ist der Kühlkanal als Aussparung innerhalb der jeweiligen Statornut ausgebildet, so dass eine Direktkühlung der Wicklungen innerhalb der Statornut durch das Kühlmittel ermöglicht ist.

Die Zugangsleitung und die Bypassleitung können insbesondere als Rohrleitung ausgestaltet sein, die jeweils über eine geeignete Dichtung fluiddicht angeschlossen werden können, um eine Leckage des Kühlmittels zu vermeiden.

Insbesondere ist vorgesehen, dass die Strömungsrichtung des in den ersten Wickelkopfbereich eingeleiteten Kühlmittels eine in Umfangsrichtung strömende Ringströmung im ersten Wickelkopfbereich erzeugt und/oder die Strömungsrichtung des in den zweiten Wickelkopfbereich eingeleiteten Kühlmittels eine in Umfangsrichtung strömende Ringströmung im zweiten Wickelkopfbereich erzeugt. Das Kühlmittel kann beispielsweise mit einer Strömungsrichtung in den jeweiligen Wickelkopfbereich eingeleitet werden, die zumindest anteilig in tangentialer Richtung weist. Vorzugsweise weist die jeweilige Strömungsrichtung des Kühlmittels beim Eintritt in den jeweiligen Wickelkopfbereich in einem größeren Ausmaß in tangentialer Richtung als in axialer Richtung einer Rotationsachse eines Rotors der elektrischen Maschine. Dadurch kann sich in dem jeweiligen Wickelkopfbereich die Ringströmung ergeben, die eine besonders gute Umspülung der Wickelköpfe und damit eine hohe Kühlleistung erreichen kann. Durch das in den ersten Wickelkopfbereich nachströmende Kühlmittel, kann bereits im ersten Wickelkopfbereich befindliches Kühlmittel in den mindestens einen Kühlkanal verdrängt werden.

Vorzugsweise ist der erste Wickelkopfbereich und/oder der zweite Wickelkopfbereich von dem gesamten Massenstrom des Kühlmittels durchströmbar. Der von einem Förderorgan, insbesondere Pumpe oder Verdichter, bereitgestellte Massenstrom des Kühlmittels kann in den ersten Wickelkopfbereich und in den zweiten Wickelkopfbereich gelangen. Dadurch kann bei den Wickelköpfen der vollständige Massenstrom des Kühlmittels zur Wärmeabfuhr zur Verfügung stehen.

Besonders bevorzugt ist eine in Strömungsrichtung vor dem ersten Wickelkopfbereich von der Zugangsleitung abgezweigte Abzweigungsleitung, zur Kühlung einer Leistungselektronik der elektrischen Maschine und/oder eines Teils davon und/oder von Stromschienen, welche die E-Maschine und die Leistungselektronik elektrisch verbinden, vorgesehen, wobei die Abzweigungsleitung über die Zugangsleitung oder an der Zugangsleitung vorbei zum ersten Wickelkopfbereich führt. Das Kühlmittel kann dadurch auch zur Kühlung der Leistungselektronik, beispielsweise eine Steuerschaltung und/oder ein Pulswechselrichter, der elektrischen Maschine verwendet werden. Eine separate Kühlung der Leistungselektronik kann dadurch eingespart werden. Das über die Abzweigungsleitung abgezweigte Kühlmittel wird hierbei stromabwärts wieder der Zugangsleitung zugeführt oder direkt dem ersten Wickelkopfbereich zugeführt, so dass der über die Abzweigungsleitung abgezweigte Massenstrom des Kühlmittels für die Kühlung der Wickelköpfe wieder zur Verfügung steht.

Insbesondere ist vorgesehen, dass die Abzweigungsleitung über ein Stellventil zur Einstellung eines in die Abzweigungsleitung abgezweigten Massenstroms von der Zugangsleitung abgeht, wobei das Stellventil in Abhängigkeit von einem - für zumindest einen Teil der Leistungselektronik und/oder von der die E-Maschine und die Leistungelektronik verbindenden Stromschienen - detektierten Kühlbedarf steuerbar ist. Mit Hilfe des Stellventils ist es möglich nur so viel Kühlmittel aus der Zugangsleitung abzuzweigen, wie zur Kühlung der zu kühlenden Komponenten gerade erforderlich ist. Unnötige Druckverluste können dadurch vermieden werden.

Dadurch kann eine optimale Kühlung bei möglichst wenigen hydraulischen Verlusten erreicht werden.

Vorzugsweise ist der zweite Wickelkopfbereich über einen Ausgleichbehälter, insbesondere zur Abfuhr von Luft an die Umgebung, eine Pumpe zur Förderung des Kühlmittels und einen Kühler zur Kühlung des Kühlmittels mit der Zugangsleitung fluidisch verbunden. Dadurch kann für das Kühlmittel ein Kühlmittelkreislauf ausgebildet werden. Hierbei ist es möglich, dass der Kühlmittelkreislauf gasförmige Bestandteile an die Umgebung abgibt. Der Kühlmittelkreislauf kann auch geschlossen ausgeführt sein, indem gasförmige Bestandteile des Kühlmittels kondensiert und wiederverwendet werden. Der Kühler zur Kühlung des Kühlmittels kann insbesondere durch den Frontkühler des Kraftfahrzeugs ausgebildet sein. Vorzugsweise kann die Pumpe zur Förderung des Kühlmittels von der elektrischen Maschine elektrisch angetrieben werden.

Besonders bevorzugt ist als Kühlmittel eine dielektrische Flüssigkeit, welches eine maximale Dichte von 0,75 kg/l bei 15°C und/oder eine maximale Viskosität von 6 mm²/s bei 40°C und/oder eine minimale Wärmekapazität von 2,3'kJ/(kg*K) bei 80°C und/oder eine minimale Wärmeleitfähigkeit von 0,12 W/(m/K) bei 80°C und/oder eine maximale elektrische Leitfähigkeit von 1000 nS/m bei 25°C besitzt, eingefüllt. Geeignete elektrisch nichtleitende Flüssigkeiten sind in WO 95/07323 A1 angegeben, auf dessen Inhalt als Teil der Erfindung hiermit verwiesen wird. Dies ermöglicht eine Direktkühlung stromführender Bauelemente ohne zwischengeschaltete Isolierung, die den Wärmeübergang beeinträchtigen könnte.

Insbesondere ist eine elektrische Kontaktierung der elektrischen Maschine mit Zuleitern zur Zufuhr von elektrischer Energie im ersten Wickelkopfbereich ausgebildet. Die Zuleiter können aus dem ersten Wickelkopfbereich herausgeführt sein, um elektrische Energie mit der.im Motorbetrieb oder im Generatorbetrieb betriebenen elektrischen Maschine auszutauschen. Die Zuleiter weisen in der Regel eine elektrische Isolierung auf. Zudem entsteht insbesondere an der Kontaktstelle der Zuleiter mit dem zugeordneten Wickelkopf eine hohe Wärmeentwicklung. Da das Kühlmittel zuerst dem ersten Wickelkopfbereich mit den dort vorgesehenen Zuleitern zugeführt wird, kann das Kühlmittel noch mit einer besonders geringen Temperatur vorliegen und eine entsprechend hohe Wärmemenge entsprechend schnell aufnehmen. Hierbei kann berücksichtigt werden, dass in dem zweiten Wickelkopfbereich, in dem keine Zuleiter vorgesehen sind, eine entsprechend geringere Wärmeübertragungsleistung benötigt wird, eine gewisse zwischenzeitliche Erwärmung des Kühlmittels zugelassen werden kann.

Vorzugsweise ist vorgesehen, dass Wickelköpfe innerhalb des ersten Wickelkopfbereichs und/oder innerhalb des zweiten Wickelkopfbereichs und/oder elektronische Bauelemente der Leistungselektronik unisoliert und von dem Kühlmittel direkt umspülbar frei liegen. Dies ermöglicht einen besonders geringen Wärmeübertragungswiderstand zwischen den stromführenden Bauelementen und dem Kühlmittel. Das Kühlmittel ist hierbei insbesondere als dielektrische Flüssigkeit ausgestaltet, um Kurzschlüsse zu vermeiden.

Besonders bevorzugt ist die elektrische Maschine zum rein elektrischen Antrieb des Kraftfahrzeugs ausgestaltet. Die elektrische Maschine ist dadurch für eine entsprechend hohe Energieerzeugung im Motorbetrieb ausgestaltet, die zu einem entsprechend hohen Kühlbedarf führt. Aufgrund der verbesserten Kühlleistung mit Hilfe des Kühlsystems kann bei einem geringen konstruktiven Aufwand der erhöhte Kühlbedarf bereitgestellt werden. Insbesondere ermöglicht das Kühlsystem eine besonders hohe Kühlleistung, so dass die elektrische Maschine sogar zum rein elektrischen Antrieb eines Sportwagens oder Rennwagens ausgelegt werden kann.

Nachfolgend wird die Erfindung unter Bezugnahme auf die anliegende Zeichnung anhand eines bevorzugten Ausführungsbeispiels exemplarisch erläutert, wobei die nachfolgend dargestellten Merkmale sowohl jeweils einzeln als auch in Kombination einen Aspekt der Erfindung darstellen können. Es zeigt:

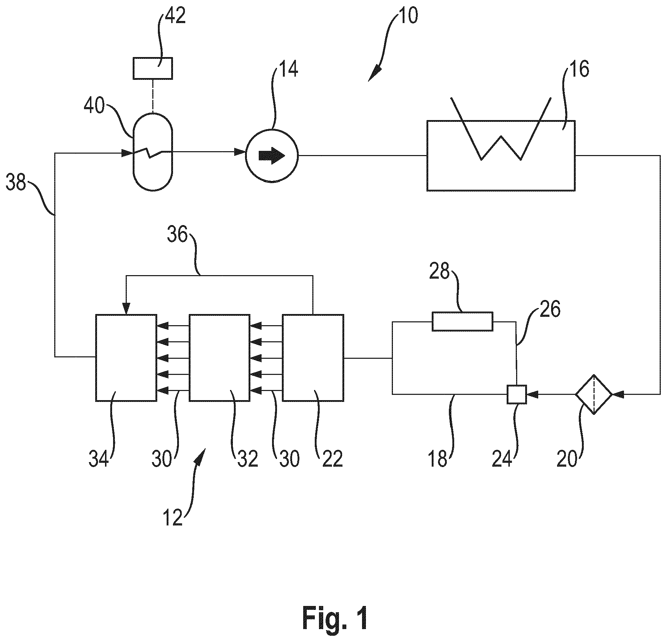

- Fig. 1: eine schematische Prinzipdarstellung eines Kühlsystems für eine elektrische Maschine eines Kraftfahrzeugs.

Das in Fig: 1 dargestellte Kühlsystem 10 kann zur Kühlung einer zum elektrischen Antrieb eines Kraftfahrzeugs vorgesehenen elektrischen Maschine 12 ("Traktionsmaschine") vorgesehen sein. Ein, insbesondere dielektrisches, Kühlmittel kann von einer Pumpe 14 einem Kühler 16 zugeführt werden, um das Kühlmittel auf eine gewünschte Betriebstemperatur abzukühlen. Von dem Kühler 16 kann das kalte Kühlmittel über eine Zugangsleitung 18 nach dem Passieren eines Filters 20 einem ersten Wickelkopfbereich 22 der elektrischen Maschine 12 zugeführt werden. Insbesondere ist in der Zugangsleitung 18 ein Stellventil 24, um je nach Bedarf einen Teil des Massenstroms des Kühlmittels über eine Abzweigungsleitung 26 einer Komponente 28, welche beispielsweise eine Leistungselektronik sein kann, der elektrischen Maschine 12 zuzuführen und die Komponente 28 zu kühlen. Das von der Komponente 28 kommende Kühlmittel kann wieder der Zugangsleitung 18 zu geführt werden oder direkt über einen separaten Anschluss dem ersten Wickelkopfbereich 22 der elektrischen Maschine 12 zugeführt werden.

In dem ersten Wickelkopfbereich 22 kann sich eine Ringströmung einstellen, mit deren Hilfe der in dem ersten Wickelkopfbereich 22 vorgesehene Wickelkopf und Zuleitungen gekühlt werden können. Das Kühlmittel kann aus dem ersten Wickelkopfbereich 22 in eine Vielzahl von Kühlleitungen 30 gedrückt werden, um einen Stator 32, insbesondere die in Statornuten vorgesehenen Wicklungen der elektrischen Maschine 12, zu kühlen. Die Kühlleitungen 30 münden an einer axial entgegengesetzten Seite der elektrischen Maschine 12 in einen zweiten Wickelkopfbereich 34 ein. In dem zweiten Wickelkopfbereich 34 kann sich eine Ringströmung einstellen, mit deren Hilfe der in dem zweiten Wickelkopfbereich 34 vorgesehene Wickelkopf gekühlt werden kann.

Da sich in den Wickelkopfbereichen 22, 34 hydraulische Hinterschnitte ergeben und/oder gasförmige Bestandteile auftreten können, ist an der in Schwerkraftrichtung höchsten Stelle des ersten Wickelkopfbereichs 22 eine Bypassleitung 36, welche eine in dem ersten Wickelkopfbereich 22 entstehende Gasphase sammeln und mit Hilfe von durch die Bypassleitung 36 geförderten flüssigen Kühlmittel an dem Stator 32 vorbei in den zweiten Wickelkopfbereich 34 fördern kann. Vorzugsweise mündet die Bypassleitung 36 an der in Schwerkraftrichtung höchsten Stelle oder etwas darunter in den zweiten Wickelkopfbereich 34 ein. Eine Ableitung 38 ist an dem zweiten Wickelkopfbereich 38 angeschlossen, wobei die Ableitung 38 besonders bevorzugt in der Nähe einer Einmündung der Bypassleitung 36 in den zweiten Wickelkopfbereich 34 angeschlossen ist, um die aus der Bypassleitung 36 zugeführte Gasphase möglichst umgehend abzuführen und einem Ausgleichbehälter 40 zuzuführen. Die gasförmigen Bestandteile können aus dem Ausgleichbehälter 40 der Umgebung zugeführt werden, in einem, insbesondere als Absorber ausgestalteten, Lufttrockner 42 getrocknet und/oder kondensiert werden. Das flüssige Kühlmittel kann von der Pumpe 14 aus dem Ausgleichbehälter 40 wieder im Kreis gefördert werden.

## Patentansprüche

1. Kühlsystem (10) zur Kühlung einer elektrischen Maschine (12) eines Kraftfahrzeugs, mit
einer Zugangsleitung (18) zur Zuführung eines gekühlten Kühlmittels zu einem ersten Wickelkopfbereich (22) der elektrischen Maschine (12), mindestens einer von dem ersten Wickelkopfbereich (22) durch einen Stator (32) der elektrischen Maschine (12) bis zu einem zweiten Wickelkopfbereich (34) der elektrischen Maschine (12) führenden Kühlleitung (30) und einer von dem ersten Wickelkopfbereich (22) zum zweiten Wickelkopfbereich (34) an dem Stator (32) vorbei geführten Bypassleitung (36),
**dadurch gekennzeichnet, dass**
das grundsätzlich flüssige Kühlmittel gasförmige Bestandteile enthält,
wobei die Bypassleitung (36) zur Sammlung und/oder Abfuhr von Luft an einer in Schwerkraftrichtung höchsten Stelle von dem ersten Wickelkopfbereich (22) abgeht und/oder an einer in Schwerkraftrichtung höchsten Stelle in den zweiten Wickelkopfbereich (34) einmündet.

2. Kühlsystem nach Anspruch 1, wobei die Strömungsrichtung des in den ersten Wickelkopfbereich (22) eingeleiteten Kühlmittels eine in Umfangsrichtung strömende Ringströmung im ersten Wickelkopfbereich (22) erzeugt und/oder die Strömungsrichtung des in den zweiten Wickelkopfbereich (34) eingeleiteten Kühlmittels eine in Umfangsrichtung strömende Ringströmung im zweiten Wickelkopfbereich (34) erzeugt.

3. Kühlsystem nach Anspruch 1 oder 2, wobei der erste Wickelkopfbereich (22) und/oder der zweite Wickelkopfbereich (34) von dem gesamten Massenstrom des Kühlmittels durchströmbar ist.

4. Kühlsystem nach einem der Ansprüche 1 bis 3, wobei eine in Strömungsrichtung vor dem ersten Wickelkopfbereich (22) von der Zugangsleitung (18) abgezweigte Abzweigungsleitung (26) zur Kühlung von mindestens einer weiteren Komponente (28) der elektrischen Maschine (12) vorgesehen ist, wobei die Abzweigungsleitung (26) über die Zugangsleitung (18) oder an der Zugangsleitung (18) vorbei zum ersten Wickelkopfbereich (22) führt.

5. Kühlsystem nach Anspruch 4, wobei die Abzweigungsleitung (26) über ein Stellventil (24) zur Einstellung eines in die Abzweigungsleitung (26) abgezweigten Massenstroms von der Zugangsleitung (18) abgeht, wobei das Stellventil (24) in Abhängigkeit von einem für die Komponente (28) detektierten Kühlbedarf steuerbar ist.

6. Kühlsystem nach einem der Ansprüche 1 bis 5, wobei der zweite Wickelkopfbereich (34) über einen Ausgleichbehälter (40), insbesondere zur Abfuhr von Luft an die Umgebung, eine Pumpe (14) zur Förderung des Kühlmittels und einen Kühler (16) zur Kühlung des Kühlmittels mit der Zugangsleitung (18) fluidisch verbunden ist.

7. Kühlsystem nach einem der Ansprüche 1 bis 6, wobei als Kühlmittel eine dielektrische Flüssigkeit ist, welches eine maximale Dichte von 0,75 kg/l bei 15°C und/oder eine maximale Viskosität von 6 mm2/s bei 40°C und/oder eine minimale Wärmekapazität von 2,3 kJ/(kg*K) bei 80°C und/oder eine minimale Wärmeleitfähigkeit von 0,12 W/(m/K) bei 80°C und/oder eine maximale elektrische Leitfähigkeit von 1000 nS/m bei 25°C besitzt.

8. Kühlsystem nach einem der Ansprüche 1 bis 7, wobei eine elektrische Kontaktierung der elektrischen Maschine (12) mit Zuleitern zur Zufuhr von elektrischer Energie im ersten Wickelkopfbereich (22) ausgebildet ist.

9. Kühlsystem nach einem der Ansprüche 1 bis 8, wobei Wickelköpfe innerhalb des ersten Wickelkopfbereichs (22) und/oder innerhalb des zweiten Wickelkopfbereichs (34) und/oder elektronische Bauelemente der Komponente (28) unisoliert und von dem Kühlmittel direkt umspülbar frei liegen.

10. Kühlsystem nach einem der Ansprüche 1 bis 9, wobei die elektrische Maschine (12) zum rein elektrischen Antrieb des Kraftfahrzeugs ausgestaltet ist.

11. Verwendung eines zur Kühlung einer elektrischen Maschine (12) eines Kraftfahrzeugs vorgesehenen Kühlsystems (10), mit
einer Zugangsleitung (18) zur Zuführung eines gekühlten Kühlmittels zu einem ersten Wickelkopfbereich (22) der elektrischen Maschine (12),
mindestens einer von dem ersten Wickelkopfbereich (22) durch einen Stator (32) der elektrischen Maschine (12) bis zu einem zweiten Wickelkopfbereich (34) der elektrischen Maschine (12) führenden Kühlleitung (30) und einer von dem ersten Wickelkopfbereich (22) zum zweiten Wickelkopfbereich (34) an dem Stator (32) vorbei geführten Bypassleitung (36),
wobei die Bypassleitung (36) zur Sammlung und/oder Abfuhr von Luft an einer in Schwerkraftrichtung höchsten Stelle von dem ersten Wickelkopfbereich (22) abgeht und/oder an einer in Schwerkraftrichtung höchsten Stelle in den zweiten Wickelkopfbereich (34) einmündet;
zu dem Zweck als Kühlmittel in dem Kühlsystem (10) ein grundsätzlich flüssiges Kühlmittel mit gasförmigen Bestandteile zu verwenden.

## Claims

1. A cooling system (10) for cooling an electric machine (12) of a motor vehicle, having
an access line (18) for supplying cooled coolant to a first winding head area (22) of the electric machine (12),
at least one cooling line (30) leading from the first winding head area (22) through a stator (32) of the electric machine (12) to a second winding head area (34) of the electric machine (12), and a bypass line (36) guided from the first winding head area (22) to the second winding head area (34) past the stator (32), **characterised in that**
the principally liquid coolant contains gaseous components, wherein the bypass line (36) for collecting and/or discharging air comes off of the first winding head area (22) at a highest point in the direction of gravity and/or opens into the second winding head area (34) at a highest point in the direction of gravity.

2. The cooling system according to claim 1, wherein the flow direction of the coolant introduced into the first winding head area (22) generates an annular flow flowing in the circumferential direction in the first winding head area (22) and/or the flow direction of the coolant introduced into the second winding head area (34) generates an annular flow flowing in the circumferential direction in the second winding head area (34).

3. The cooling system according to claim 1 or 2, wherein the entire mass flow of the coolant can flow through the first winding head area (22) and/or the second winding head area (34).

4. The cooling system according to any one of claims 1 to 3, wherein a branch line (26), branched off from the access line (18) upstream of the first winding head area (22) in flow direction, is provided for cooling at least one further component (28) of the electric machine (12), wherein the branch line (26) leads via the access line (18) or bypassing the access line (18) to the first winding head area (22).

5. The cooling system of claim 4, wherein the branch line (26) comes off of the access line (18) via an actuator valve (24) for adjusting a mass flow which is branched into the branch line (26), wherein the actuator valve (24) can be controlled depending on a cooling requirement detected for the component (28).

6. A cooling system according to any one of claims 1 to 5, wherein the second winding head area (34) is fluidly connected to the access line (18) via an expansion tank (40), in particular for discharging air to the surroundings, a pump (14) for conveying the coolant, and a radiator (16) for cooling the coolant.

7. A cooling system according to any one of claims 1 to 6, wherein a dielectric fluid is used as the coolant, which has a maximum density of 0.75 kg/l at 15°C and/or a maximum viscosity of 6 mm²/s at 40°C and/or a minimum heat capacity of 2.3 kJ/(kg*K) at 80°C and/or a minimum thermal conductivity of 0.12 W/(m/K) at 80°C and/or a maximum electrical conductivity of 1000 nS/m at 25°C.

8. A cooling system according to any one of claims 1 to 7, wherein an electrical contact of the electric machine (12) with supply conductors for supplying electrical energy is formed in the first winding head area (22).

9. A cooling system according to any one of claims 1 to 8, wherein winding heads within the first winding head area (22) and/or within the second winding head area (34) and/or electronic components of the component (28) are uninsulated and exposed so that the coolant can directly wash around them.

10. The cooling system according to any one of claims 1 to 9, wherein the electric machine (12) is configured for pure electric drive of the motor vehicle.

11. Use of a cooling system (10) provided for cooling an electric machine (12) of a motor vehicle, having
an access line (18) for supplying cooled coolant to a first winding head area (22) of the electric machine (12), at least one cooling line (30) leading from the first winding head area (22) through a stator (32) of the electric machine (12) to a second winding head area (34) of the electric machine (12), and
a bypass line (36) guided from the first winding head area (22) to the second winding head area (34) past the stator (32),
wherein the bypass line (36) for collecting and/or discharging air comes off of the first winding head area (22) at a highest point in the direction of gravity and/or opens into the second winding head area (34) at a highest point in the direction of gravity;
for the purpose of using an essentially liquid coolant with gaseous components as the coolant in the cooling system (10).

## Revendications

1. Système de refroidissement (10) destiné au refroidissement d'une machine électrique (12) d'un véhicule automobile, comprenant
une conduite d'alimentation (18) pour acheminer un fluide de refroidissement refroidi vers une première zone de tête de bobinage (22) de la machine électrique (12),
au moins une conduite de refroidissement (30) menant de la première zone de tête de bobinage (22) jusqu'à une deuxième zone de tête de bobinage (34) de la machine électrique (12) en passant par un stator (32) de la machine électrique (12), et
une conduite de contournement (36) menant de la première zone de tête de bobinage (22) à la deuxième zone de tête de bobinage (34) en contournant le stator (32),
**caractérisé en ce que**
le fluide de refroidissement essentiellement liquide contient des constituants gazeux, la conduite de contournement (36), pour la collecte et/ou l'évacuation d'air, partant d'un point le plus élevé dans le sens de la gravité de la première zone de tête de bobinage (22) et/ou débouchant dans la deuxième zone de tête de bobinage (34) en un point le plus élevé dans le sens de la gravité.

2. Système de refroidissement selon la revendication 1, dans lequel le sens de l'écoulement du fluide de refroidissement introduit dans la première zone de tête de bobinage (22) génère un écoulement annulaire circulant dans le sens circonférentiel dans la première zone de tête de bobinage (22) et/ou le sens de l'écoulement du fluide de refroidissement introduit dans la deuxième zone de tête de bobinage (34) génère un écoulement annulaire circulant dans le sens circonférentiel dans la deuxième zone de tête de bobinage (34).

3. Système de refroidissement selon la revendication 1 ou 2, dans lequel la première zone de tête de bobinage (22) et/ou la deuxième zone de tête de bobinage (34) peuvent être traversées par l'intégralité du débit massique du fluide de refroidissement.

4. Système de refroidissement selon l'une quelconque des revendications 1 à 3, dans lequel une conduite de dérivation (26) se détachant de la conduite d'alimentation (18) en amont, dans le sens de l'écoulement, de la première zone de tête de bobinage (22) est prévue pour le refroidissement d'au moins un autre composant (28) de la machine électrique (12), la conduite de dérivation (26) menant à la première zone de tête de bobinage (22) par le biais de la conduite d'alimentation (18) ou en contournant la conduite d'alimentation (18).

5. Système de refroidissement selon la revendication 4, dans lequel la conduite de dérivation (26) part de la conduite d'alimentation (18) avec intercalage d'une vanne de réglage (24) destinée au réglage d'un débit massique dérivé dans la conduite de dérivation (26), la vanne de réglage (24) pouvant être commandée en fonction d'un besoin de refroidissement détecté pour le composant (28).

6. Système de refroidissement selon l'une quelconque des revendications 1 à 5, dans lequel la deuxième zone de tête de bobinage (34) est reliée fluidiquement à la conduite d'alimentation (18) avec intercalage d'un réservoir de compensation (40), notamment pour l'évacuation d'air vers l'environnement, d'une pompe (14) pour la circulation du fluide de refroidissement et d'un refroidisseur (16) pour le refroidissement du fluide de refroidissement.

7. Système de refroidissement selon l'une quelconque des revendications 1 à 6, dans lequel le fluide de refroidissement est un liquide diélectrique présentant une masse volumique maximale de 0,75 kg/l à 15 °C et/ou une viscosité maximale de 6 mm²/s à 40 °C et/ou une capacité thermique minimale de 2,3 kJ/(kg*K) à 80 °C et/ou une conductivité thermique minimale de 0,12 W/(m/K) à 80 °C et/ou une conductivité électrique maximale de 1000 nS/m à 25 °C.

8. Système de refroidissement selon l'une quelconque des revendications 1 à 7, dans lequel un raccordement électrique de la machine électrique (12) avec des conducteurs destinés à l'alimentation en énergie électrique est réalisé dans la première zone de tête de bobinage (22).

9. Système de refroidissement selon l'une quelconque des revendications 1 à 8, dans lequel les têtes de bobinage à l'intérieur de la première zone de tête de bobinage (22) et/ou à l'intérieur de la deuxième zone de tête de bobinage (34) et/ou les composants électroniques du composant (28) ne sont pas isolés et sont exposés, leur permettant d'être directement baignés par le fluide de refroidissement.

10. Système de refroidissement selon l'une quelconque des revendications 1 à 9, dans lequel la machine électrique (12) est conçue pour un entraînement purement électrique du véhicule automobile.

11. Utilisation d'un système de refroidissement (10) prévu pour le refroidissement d'une machine électrique (12) d'un véhicule automobile, comprenant
une conduite d'alimentation (18) pour acheminer un fluide de refroidissement refroidi vers une première zone de tête de bobinage (22) de la machine électrique (12),
au moins une conduite de refroidissement (30) menant de la première zone de tête de bobinage (22) jusqu'à une deuxième zone de tête de bobinage (34) de la machine électrique (12) en passant par un stator (32) de la machine électrique (12), et
une conduite de contournement (36) menant de la première zone de tête de bobinage (22) à la deuxième zone de tête de bobinage (34) en contournant le stator (32) ;
ladite conduite de contournement (36), pour la collecte et/ou l'évacuation d'air, partant d'un point le plus élevé dans le sens de la gravité de la première zone de tête de bobinage (22) et/ou débouchant dans la deuxième zone de tête de bobinage (34) en un point le plus élevé dans le sens de la gravité ;
dans le but d'utiliser, comme fluide de refroidissement dans le système de refroidissement (10), un fluide de refroidissement essentiellement liquide comportant des constituants gazeux.
